# EUROPÄISCHE PATENTANMELDUNG

(11) **EP 3 608 150 A1**
(43) Veröffentlichungstag der Anmeldung: **12.02.2020**
(21) Anmeldenummer: 19184293.9
(22) Anmeldetag: 04.07.2019
(51) Int. Cl.: B60L 1/00

(54) **PISTENRAUPE MIT EINEM KETTENLAUFWERK**

(30) Priorität: 07.08.2018 DE 102018213239
(71) Anmelder: Kässbohrer Geländefahrzeug AG, 88471 Laupheim (DE)
(72) Erfinder: Betz, Peter, 88471 Baustetten (DE); Kuhn, Michael, 88480 Achstetten (DE); Luigart, Christof, 89155 Erbach (DE); Mayer, Andreas, 89597 Munderkingen (DE)
(74) Vertreter: Patentanwälte Ruff, Wilhelm, Beier, Dauster & Partner mbB

(57) **Zusammenfassung**

1. Pistenraupe mit einem Kettenlaufwerk

2.1 Eine derartige Pistenraupe mit einem hydrostatischen Antriebssystem für das Kettenlaufwerk, das eine hydraulische Verteilerpumpe umfasst, sowie mit einem zentralen Antriebsmotor, der die hydraulische Verteilerpumpe antreibt, ist bekannt.
2.2 Erfindungsgemäß ist der zentrale Antriebsmotor als Elektromotor ausgeführt, der von einer fahrzeugfest montierten Energiequelle angetrieben ist.
2.3 Einsatz für Kettenfahrzeuge

## Beschreibung

Die Erfindung betrifft eine Pistenraupe mit einem Kettenlaufwerk, mit einem hydrostatischen Antriebssystem für das Kettenlaufwerk, das eine hydraulische Verteilerpumpe umfasst, sowie mit einem zentralen Antriebsmotor, der die hydraulische Verteilerpumpe antreibt.

Eine derartige Pistenraupe ist durch einen Pistenbully PB400 der Anmelderin allgemein bekannt. Die bekannte Pistenraupe weist ein Kettenlaufwerk mit zwei Laufwerksseiten auf, wobei eine Kette der jeweilige Laufwerksseite mittels eines Turasrads antreibbar ist. Jedes Turasrad der jeweiligen Laufwerksseite wird über einen Hydromotor angetrieben, der Teil eines hydraulischen Antriebssystems ist. Das hydraulische Antriebssystem wird gespeist durch eine hydraulische Verteilerpumpe, die mittels eines zentralen Dieselmotors angetrieben wird.

Aus der DE 20 2013 004 087 U1 ist eine Pistenraupe mit einem emissionsfreien Fahrantriebssystem bekannt. Elektromotoren dienen zum Antrieb von Turasrädern eines Kettenlaufwerks der Pistenraupe sowie zum Antrieb einer Heckfräse der Pistenraupe.

Die US 5,363,937 A offenbart ein vollelektrisch betriebenes Kettenfahrzeug, wobei Elektromotoren sowohl zum Antrieb eines Kettenlaufwerks des Kettenfahrzeugs als auch zum Antrieb eines heckseitigen Arbeitsgeräts, nämlich einer Heckfräse, vorgesehen sind.

Aufgabe der Erfindung ist es, eine Pistenraupe der eingangs genannten Art zu schaffen, die mit geringem Aufwand einen emissionsfreien Betrieb der Pistenraupe ermöglicht.

Diese Aufgabe wird dadurch gelöst, dass der zentrale Antriebsmotor als Elektromotor ausgeführt ist, der von einer fahrzeugfest montierten Energiequelle angetrieben ist. Die erfindungsgemäße Lösung nutzt einen zentralen Elektromotor, um das hydrostatische Antriebssystem der Pistenraupe zu betreiben. Erfindungsgemäß wird gegenüber einer herkömmlichen Pistenraupe der Dieselmotor durch einen Elektromotor ersetzt. Gleichzeitig wird jedoch das gesamte Hydrauliksystem der Pistenraupe beibehalten. Der zentrale Elektromotor ist zum einen von seinen Leistungsdaten her an das hydrostatische Antriebssystem angepasst, um einen einwandfreien Betrieb des hydrostatischen Antriebssystems und damit insbesondere einen entsprechenden Betrieb der hydraulischen Verteilerpumpe zu ermöglichen. Zum anderen sind mechanische Anschlussmaße und Anschlusseinrichtungen des Elektromotors derart auf die hydraulische Verteilerpumpe abgestimmt, dass ein Anflanschen des Elektromotors an die hydraulische Verteilerpumpe ermöglicht ist. Dem Elektromotor kann ein geeignetes Getriebe nachgeschaltet sein, das eine auf die Verteilerpumpe angepasste Drehzahl erzeugt und mit der Verteilerpumpe in Wirkverbindung ist. Als fahrzeugfest montierte Energiequelle kann eine Brennstoffzelle, ein Batteriesystem oder Ähnliches vorgesehen sein. Unter der hydraulischen Verteilerpumpe ist eine Kombination aus einem Verteilergetriebe und wenigstens zwei mit dem Verteilergetriebe gekoppelten Hydraulikpumpen zu verstehen, die jeweils einer Laufwerksseite des Kettenlaufwerks zugeordnet sind. Der zentrale Elektromotor wird an das Verteilergetriebe angeflanscht und treibt so die "Verteilerpumpe", nämlich die Kombination aus Verteilergetriebe und wenigstens zwei hydraulischen Pumpeinheiten, an. Den beiden Hydraulikpumpen sind zwei Hydromotoren zugeordnet, die jeweils ein Turasrad der jeweiligen Kettenlaufwerksseite antreiben.

In Ausgestaltung der Erfindung ist die Energiequelle durch ein wiederaufladbares Batteriesystem gebildet. Ein solches Batteriesystem weist wenigstens einen Akkumulator auf.

In weiterer Ausgestaltung der Erfindung ist fahrzeugseitig ein Ladegerät zum Aufladen des Batteriesystems montiert. Das Ladegerät ist vorzugsweise an einer Rückwand eines Fahrerhauses der Pistenraupe angebracht.

In weiterer Ausgestaltung der Erfindung ist das Batteriesystem an einem Fahrwerksrahmen unterhalb eines Fahrerhauses der Pistenraupe austauschbar angeordnet. Das Batteriesystem wird vorzugsweise in dem Bereich des Fahrwerksrahmens angeordnet, in dem bei einer herkömmlichen Pistenraupe der Dieselmotor und/oder der Kraftstofftank untergebracht sind. Vorteilhaft ist das Batteriesystem auf gleicher Höhe oder unterhalb entsprechender Fahrwerksträger des Fahrwerksrahmens angebracht, um einen tiefen Schwerpunkt für die Pistenraupe zu generieren. Die austauschbare Anordnung des Batteriesystems ermöglicht einen Wechsel des Batteriesystems und einen Austausch gegen ein neues, wiederaufladbares Batteriesystem.

In weiterer Ausgestaltung der Erfindung ist das Fahrerhaus an dem Fahrwerksrahmen kippbeweglich gelagert, und das Batteriesystem ist in gekipptem Servicezustand des Fahrerhauses für einen Austausch zugänglich angeordnet. Dies ermöglicht für Bedienpersonen einen einfachen Zugriff auf das Batteriesystem, um einen Austausch des Batteriesystems oder auch Service- oder Reparaturmaßnahmen im Bereich des Batteriesystems und entsprechender Anschlussleitungen zu dem zentralen Elektromotor hin zu ermöglichen.

In weiterer Ausgestaltung der Erfindung ist der Elektromotor als Synchronmotor ausgeführt. Der Synchronmotor ist als Drehstrommotor ausgeführt, dessen Rotor exakt mit einem durch eine entsprechende Netzfrequenz eines Stromnetzes vorgegebenen Drehfeld synchron umläuft. Zur Drehzahlregelung des Synchronmotors ist eine Leistungselektronik vorgesehen, die einen Frequenzumrichter einsetzt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer teilweise aufgeschnittenen Seitenansicht eine Ausführungsform einer erfindungsgemäßen Pistenraupe und
- Fig. 2: in einem Blockschema ein Antriebssystem der Pistenraupe nach Fig. 1.

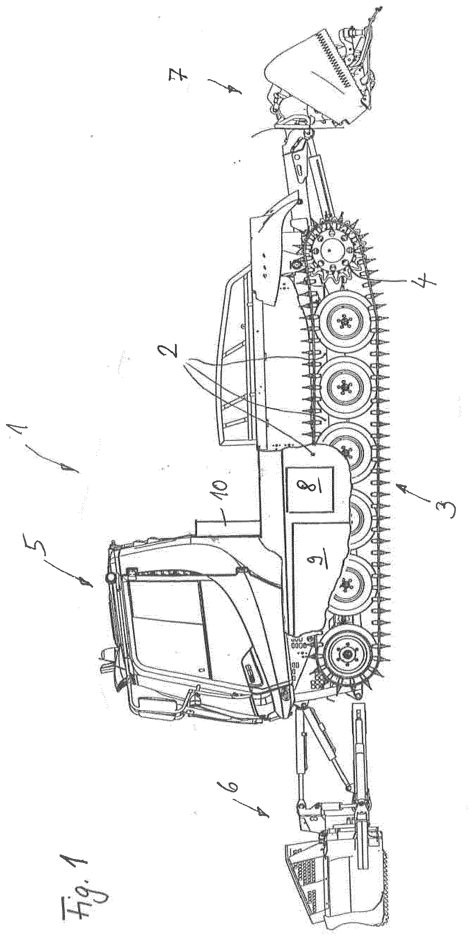

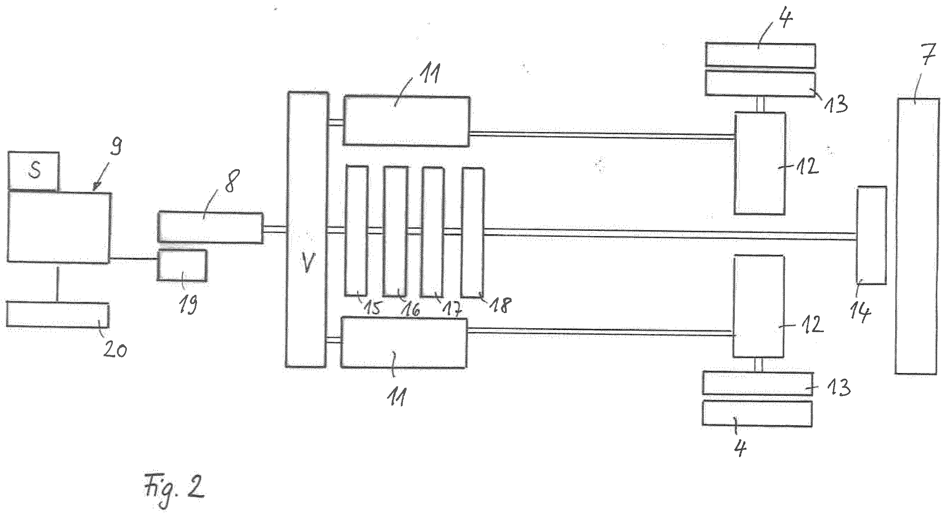

Eine Pistenraupe 1 nach den Fig. 1 und 2 weist einen Fahrwerksrahmen 2 auf, der in Fig. 1 lediglich schematisch und abschnittsweise dargestellt ist, und der ein Kettenlaufwerk 3 trägt. Das Kettenlaufwerk weist zwei auf gegenüberliegenden Längsseiten des Fahrwerkrahmens 2 angeordnete Laufwerksseiten auf. Jede Laufwerksseite ist durch eine umlaufende Kette, durch ein frontseitiges Spannrad, durch daran anschließende, in Fahrzeuglängsrichtung hintereinander angeordnete Laufräder sowie durch ein rückseitiges Triebrad gebildet, das auch als Turasrad 4 bezeichnet wird. Die Kette läuft oberhalb und unterhalb der Laufräder entlang und ist frontseitig um das Spannrad sowie rückseitig um das Turasrad 4 umgelenkt.

Heckseitig ist an dem Fahrwerksrahmen 2 ein nicht näher bezeichneter Heckgeräteträger vorgesehen. An dem Heckgeräteträger ist eine Heckfräse 7 gehalten. Die Heckfräse weist eine oder mehrere angetriebene Fräswellen auf, die in Betrieb einen Schneeuntergrund zerkleinern. In normaler Fahrtrichtung der Pistenraupe 1 ist hinter den Fräswellen eine nicht näher bezeichnete Finisheranordnung vorgesehen, die eine Glättung des zerkleinerten und durch die Fräswellen aufgeworfenen Schnees bewirkt. Die Finisheranordnung ist Teil der Heckfräse 7.

Frontseitig ist die Pistenraupe 1 mit einem Räumschild 6 versehen, das an dem Fahrwerksrahmen 2 frontseitig angelenkt ist.

Der Fahrwerksrahmen 2 trägt oberhalb des Kettenlaufwerks 3 in einer Fronthälfte ein Fahrerhaus 5, das um eine in Fahrzeugquerrichtung erstreckte Kippachse kippbeweglich an dem Fahrwerksrahmen 2 gelagert ist. Die Kippachse ist an einem vorderen Endbereich des Fahrwerksrahmens 2 vorgesehen, so dass das Fahrerhaus 5 aus der in Fig. 1 dargestellten Betriebsstellung im Gegenuhrzeigersinn nach vorne und nach oben verkippt werden kann - auf die Darstellung in Fig. 1 bezogen.

Das Kettenlaufwerk 3 wird mittels eines hydrostatischen Antriebssystems angetrieben. Das hydrostatische Antriebssystem treibt zum einen zwei hydrostatische Antriebsmotoren, sogenannte Hydromotoren, 12 an, die jeweils über ein Planetengetriebe 13 mit dem entsprechenden Turasrad 4 der jeweiligen Laufwerksseite des Kettenlaufwerks 3 verbunden sind. Die Hydromotoren 12 sind als Radnabenmotoren ausgeführt und über das Planetengetriebe 13 mit dem jeweiligen Turasrad 4 mechanisch verbunden, um durch eine Rotationsbewegung einer Antriebswelle des jeweiligen Hydromotors 12 eine entsprechende Rotation des jeweiligen Turasrads 4 zu erzielen.

Die Speisung der Hydromotoren 12 erfolgt über eine hydraulische Verteilerpumpe, die durch ein Verteilergetriebe V und zwei hydraulische Fahrpumpen 11 gebildet ist, die jeweils einen der beiden Hydromotoren 12 ansteuern.

Der wenigstens einen Fräswelle der Heckfräse 7 ist ein weiterer hydrostatischer Antrieb in Form eines Hydromotors, nämlich ein hydrostatischer Fräsmotor 14, zugeordnet, um diese rotatorisch anzutreiben. Darüber hinaus umfasst das hydrostatische Antriebssystem noch eine Bremspumpe 15, eine Arbeitspumpe 16, eine Lüfterpumpe 17 und eine Fräspumpe 18, die die Speisung des hydrostatischen Fräsmotors 14 übernimmt. Die hydraulische Bremspumpe 15 dient dazu, hydraulische Bremsfunktionen von Arbeitsgeräten der Pistenraupe zu realisieren. Die Arbeitspumpe 16 dient dazu, einen Hydraulikkreis für hydraulische Linearaktuatoren wie Stellmittel für das Räumschild 6 mit Hydraulikdruck zu versorgen. Die Lüfterpumpe 17 bedient wenigstens einen hydraulischen Rotationsantrieb für wenigstens ein Lüfterrad zur Kühlung von nachfolgend näher beschriebener Fahrzeugelektrik oder zur Belüftung und Heizung sowie Klimatisierung des Fahrerhauses 5.

Das hydrostatische Antriebssystem wird durch einen zentralen Elektromotor 8 angetrieben, der mit seiner Antriebswelle mechanisch mit dem Verteilergetriebe V und mit entsprechenden Pumpwellen der Bremspumpe 15, der Arbeitspumpe 16, der Lüfterpumpe 17 und der Fräspumpe 18 koaxial verbunden ist. Eine entsprechende Drehzahl des Elektromotors 8 erzeugt demzufolge den gewünschten hydraulischen Druck in den verschiedenen hydrostatischen Pumpeinheiten für den Fahrantrieb und für weitere Arbeits- und Betriebsfunktionen der Pistenraupe 1. Der zentrale Elektromotor 8 ist ein Synchronmotor. Dieser Elektromotor 8 übernimmt die Funktion eines Dieselmotors, der bei einer herkömmlichen Pistenraupe das hydrostatische Antriebssystem für die Fahr-, Betriebs- und Arbeitsfunktionen der Pistenraupe antreibt bzw. speist. Der Elektromotor 8 wird mit Wechselstrom bei einer Betriebsspannung von 380 V oder von 100 V, je nach Ausführung des Synchronmotors, betrieben. Die Stromversorgung des Elektromotors 8 erfolgt durch ein Batteriesystem 9, das über einen Frequenzumrichter 19 mit dem Elektromotor 8 verbunden ist, um den durch das Batteriesystem 9 erzeugten Gleichstrom in den für den Elektromotor 8 benötigten Wechselstrom umzurichten. Dem Elektromotor 8 und dem Batteriesystem 9 ist eine elektronische Steuereinheit S zugeordnet, die ein Batteriemanagementsystem umfasst. Das Batteriesystem 9 wird durch eine Vielzahl von wiederaufladbaren Akkumulatoren gebildet, die miteinander verbunden sind. Das Batteriemanagementsystem sorgt für eine gleichmäßige Auslastung und Entladung der Akkumulatoren im Betrieb des Elektromotors 8. Dem Batteriesystem 9 ist zudem ein Bremschopper 20 zugeordnet, der bei Talfahrt der Pistenraupe 1 elektrische Bremsenergie aufnehmen kann, die von dem Batteriesystem 9 selbst nicht mehr aufgenommen werden kann.

Wie anhand der Fig. 1 erkennbar ist, ist das Batteriesystem 9 kompakt unterhalb des Fahrerhauses 5 angeordnet und in geeigneten Aufnahmeräumen des Fahrwerksrahmens 2 untergebracht sowie fest mit dem Fahrwerksrahmen 2 verbunden. Das Batteriesystem 9 ist in dem entsprechenden Aufnahmeraum des Fahrwerksrahmens 2 lösbar angeordnet, um bei Bedarf gegen ein neues Batteriesystem ausgetauscht werden zu können. Um eine Zugänglichkeit zu dem Batteriesystem 9 für den Fall eines Austausches zu ermöglichen, ist das Batteriesystem 9 derart unterhalb des Fahrerhauses 5 angebracht, dass nach einem Verkippen des Fahrerhauses 5 in eine Servicestellung das Batteriesystem 9 für eine entsprechende Bedienperson frei zugänglich ist.

Das Batteriesystem 9 ist zudem mittels eines Ladegeräts 10 aufladbar, das im Bereich einer Rückwand des Fahrerhauses 5 angeordnet ist. Das Ladegerät 10 weist eine Steckdose auf, in die ein Stecker eines gebäudeseitigen Stromnetzes (220 V oder 380 V) eingesteckt werden kann, um eine schnelle Aufladung des Batteriesystems 9 erzielen zu können.

## Patentansprüche

1. Pistenraupe (1) mit einem Kettenlaufwerk (3), mit einem hydrostatischen Antriebssystem für das Kettenlaufwerk (3), das eine hydraulische Verteilerpumpe umfasst, sowie mit einem zentralen Antriebsmotor, der die hydraulische Verteilerpumpe antreibt, **dadurch gekennzeichnet, dass** der zentrale Antriebsmotor als Elektromotor (8) ausgeführt ist, der von einer fahrzeugfest montierten Energiequelle angetrieben ist.

2. Pistenraupe nach Anspruch 1, **dadurch gekennzeichnet, dass** die Energiequelle durch ein wiederaufladbares Batteriesystem (9) gebildet ist.

3. Pistenraupe nach Anspruch 2, **dadurch gekennzeichnet, dass** fahrzeugseitig ein Ladegerät (10) zum Aufladen des Batteriesystems (9) montiert ist.

4. Pistenraupe nach Anspruch 2 oder 3, **dadurch gekennzeichnet, dass** das Batteriesystem (9) an einem Fahrwerksrahmen (2) unterhalb eines Fahrerhauses (5) der Pistenraupe (1) austauschbar angeordnet ist.

5. Pistenraupe nach Anspruch 4, **dadurch gekennzeichnet, dass** das Fahrerhaus (5) an dem Fahrwerksrahmen (2) kippbeweglich gelagert ist, und dass in gekipptem Servicezustand des Fahrerhauses (5) das Batteriesystem (9) für einen Austausch zugänglich angeordnet ist.

6. Pistenraupe nach Anspruch 3, **dadurch gekennzeichnet, dass** das Ladegerät (10) an einer Rückwand des Fahrerhauses (5) angebracht ist.

7. Pistenraupe nach einem der vorhergehenden Ansprüche, **dadurch gekennzeichnet, dass** der Elektromotor (8) als Synchronmotor ausgeführt ist.
